# EUROPEAN PATENT SPECIFICATION

(11) **EP 3 376 711 B1**
(45) Date of publication and mention of the grant of the patent: **08.09.2021**
(21) Application number: 16863675.1
(22) Date of filing: 11.11.2016
(51) Int. Cl.: G06F 9/455, H04L 12/24

(54) **MANAGEMENT METHOD AND DEVICE FOR MANAGING INSTRUCTION TRANSMISSION FOR AUTOMATIC VNF SCALING FUNCTION**
VERWALTUNGSVERFAHREN UND VORRICHTUNG ZUR VERWALTUNG DER ÜBERTRAGUNG VON BEFEHLEN ZUR AUTOMATISCHEN VNF-SKALIERUNGSFUNKTION
PROCÉDÉ ET DISPOSITIF DE GESTION POUR GÉRER UNE TRANSMISSION D'INSTRUCTION POUR UNE FONCTION DE MISE À L'ÉCHELLE DE FONCTION DE RÉSEAU VIRTUALISÉ (VNF) AUTOMATIQUE

(30) Priority: 11.11.2015 CN 201510768302
(43) Date of publication of application: 19.09.2018
(73) Proprietor: ZTE Corporation, Shenzhen, Guangdong 518057 (CN)
(72) Inventor: ZHU, Weihong, Shenzhen Guangdong 518057 (CN)
(74) Representative: Aipex B.V.
(86) International application number: PCT/CN2016/105440
(87) International publication number: WO 2017/080499

(56) References cited:
- WO-A1-2015/131671
- CN-A- 104 050 045
- CN-A- 104 050 045
- US-A1- 2012 173 709
- "ETSI Industry Specification Group, Network Functions Virtualisation (NFV)", MANAGEMENT AND ORCHESTRATION, ETSI GS NFV-MAN 001 V1.1.1 (2014-12), ETSI, , 30 November 2014 (2014-11-30), pages 20-37, XP009500234, Retrieved from the Internet: URL:http://www.etsi. org/deliver/etsi_gs/NFV-MAN/001_099/001/01 .01. 01_60/gs_NFV-MAN001v010101p.pdf

## Description

### TECHNICAL FIELD

The present disclosure relates to the field of communications, and particularly relates to a method and device for transmitting a management instruction and managing an automatic scaling function of a virtualized network function (VNF).

### BACKGROUND

In the management field of a wireless communication system, an interface between a network management system (NMS) and an element management system (EMS) is referred to as a northbound interface (Itf-N). The EMS is mainly used for implementing a function of an element management layer (EML) in a telecommunication management network (TMN) of the international telecommunication union (ITU), that is, for managing one or more mobile communication apparatuses. The EMS for different device providers may not be general-purpose. The NMS is mainly used for implementing a function of a NML in the TMN of the ITU, and is responsible for managing all network elements within a managed network. When there are a plurality of device providers within the managed network (called a subnet), a purpose of managing the whole subnet may be achieved through the respective EMSs;

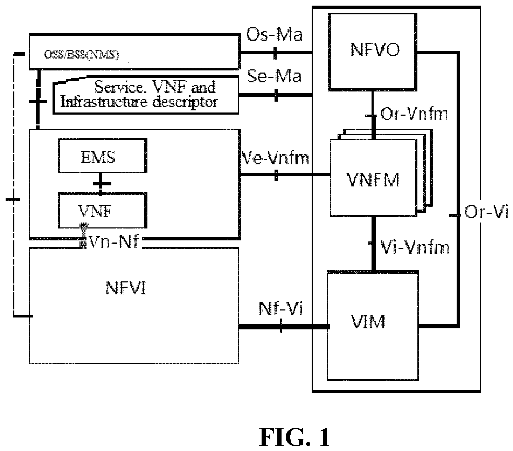

At present, in order to increase the flexibility of a communication network and reduce the management cost, a concept of network functions virtualization (NFV) is proposed by operators. When the NFV is adopted, an original physical element device is replaced with a virtualized network function (VNF) to decouple a network function from a specific hardware, as shown in FIG. 1. FIG. 1 is a diagram showing a reference architecture for the network functions virtualization in the related art, with the VNF isolated from an underlying network functions virtualization infrastructure (NFVI). For the management of the VNF, traditional maintenance and management functions are performed on the VNF instance through the EMS, and a lifecycle management function of the VNF is performed by a virtualized network function manager (VNFM). The underlying virtualized infrastructure is managed by a virtualized infrastructure manager (VIM). A specific network service is generally performed by one or more VNF instances. The network service is managed by a network functions virtualization orchestrator (NFVO).

After the network functions virtualization is realized, from the perspective of the application, when a network service instance is to be established, a VNF instance required by the network service needs to be generated first, then one or more VNF instances form a network service instance through which the network service is provided. One of the benefits of the network functions virtualization is that, as the network usage changes, resources used by the VNF instance that makes up the network service may be dynamically adjusted, that is, the VNF instance may be scaled to improve a utilization rate of the resources and achieve a purpose of energy conservation. For automatic triggering of scaling of the VNF instance, there are currently multiple solutions. An automatic scaling function module of the VNF instance may determine whether to perform scaling according to its own performance; or an automatic scaling function module of the VNF on the VNFM may determine whether to scale the VNF instance according to the VNF instance and the related resource performance data; or an automatic scaling function module of the VNF on the EMS may determine whether to scale the VNF instance according to the performance data of the VNF; or from the perspective of the NMS, an automatic scaling function module of the VNF on the NMS may determine whether to scale the VNF instance according to the performance data of the VNF. In this way, when automatic scaling function modules of individual VNFs at different levels are in effect, a conflict in controlling scaling of the VNF may occur.
A method and device for distributing virtual resources based on disk IO are provided in CN104050045A. Further, US20120173709A1 provides a method of scaling resources of a computing system. "ETSI Industry Specification Group, Network Functions Virtualisation (NFV)", MANAGEMENT AND ORCHESTRATION, ETSI GS NFV-MAN 001 V1.1.1, specifies different scaling options for VNF instances.

In view of a problem of the conflict in controlling scaling of the VNF when automatic scaling function modules of the individual VNFs at different levels are in effect in the related art, no effective solution has been provided at present.

### SUMMARY

The present disclosure provides a method and device for transmitting a management instruction and managing an automatic scaling function of a VNF, to at least solve a problem of a conflict in controlling scaling of a VNF when automatic scaling function modules of individual VNFs at different levels are in effect in the related art.

The present invention is defined according to the independent claims. Specific embodiments are defined in the dependent claims.

### BRIEF DESCRIPTION OF DRAWINGS

Accompanying drawings described herein are used to provide understanding of the present disclosure, and constitute a part of the present application. Exemplary embodiments of the present disclosure and illustrations thereof are used to explain the present disclosure. In the accompanying drawing:
FIG. 1 is a diagram showing a reference architecture for network functions virtualization in the related art;
FIG. 2 is a flow diagram of a first method for transmitting a management instruction according to an embodiment of the present disclosure;
FIG. 3 is a flow diagram of a second method for transmitting a management instruction according to an embodiment of the present disclosure;
FIG. 4 is a flow diagram of a first method for managing an automatic scaling function of virtualized network function (VNF) according to an embodiment of the present disclosure;
FIG. 5 is a flow diagram of a second method for managing an automatic scaling function of virtualized network function (VNF) according to an embodiment of the present disclosure;
FIG. 6 is a structural block diagram showing a first device for transmitting a management instruction according to an embodiment of the present disclosure;
FIG. 7 is a structural block diagram showing a first determination module 62 or a second determination module 64 in the first device for transmitting a management instruction according to an embodiment of the present disclosure;
FIG. 8 is a structural block diagram showing a second device for transmitting a management instruction according to an embodiment of the present disclosure;
FIG. 9 is a structural block diagram showing a first device for managing an automatic scaling function of virtualized network function (VNF) according to an embodiment of the present disclosure; and
FIG. 10 is a structural block diagram showing a second device for managing an automatic scaling function of virtualized network function (VNF) according to an embodiment of the present disclosure.

### DETAILED DESCRIPTION

Hereinafter, the present disclosure will be described in detail with reference to accompanying drawings and in conjunction with embodiments. It should be noted that the embodiments in the present application and features in the embodiments may be combined with each other without conflicts.

It should be noted that terms "first", "second", and the like in the description and claims of the present disclosure and the foregoing accompanying drawings are used to distinguish similar objects and do not necessarily describe a specific sequence or precedence order.

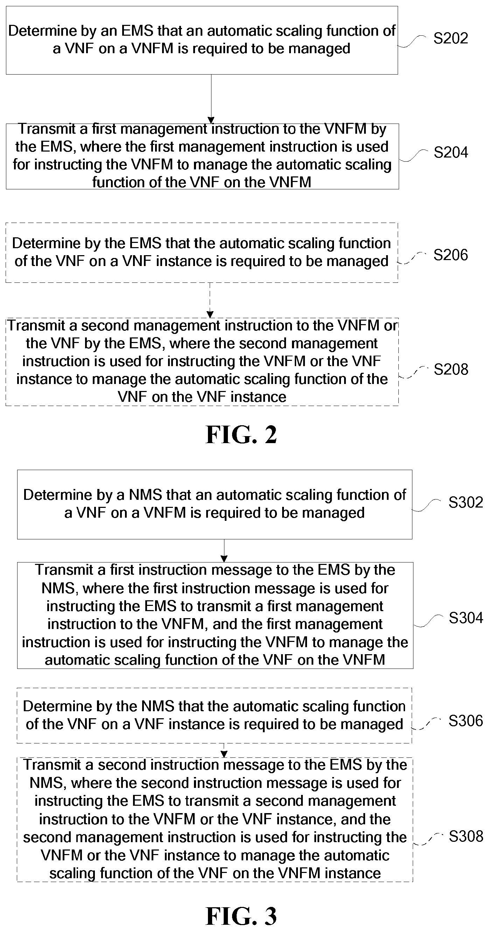

In this embodiment, there is provided a method for transmitting a management instruction. FIG. 2 is a flow diagram of a first method for transmitting a management instruction according to an embodiment of the present disclosure. As shown in FIG. 2, the method includes steps described below.

In step S202, it is determined by an element management system (EMS) that an automatic scaling function of VNF on a virtualized network function manager (VNFM) is required to be managed.

In step S204, a first management instruction is transmitted to the VNFM by the EMS. The first management instruction is used for instructing the VNFM to manage the automatic scaling function of the VNF on the VNFM.

Alternatively, in step S206, it is determined by the EMS that the automatic scaling function of the VNF on a VNF instance is required to be managed. In step S208, a second management instruction is transmitted to the VNFM or the VNF instance by the EMS. The second management instruction is used for instructing the VNFM or the VNF instance to manage the automatic scaling function of the VNF on the VNF instance.

By means of the above steps, the EMS can manage either the automatic scaling function of the VNF on the VNFM or the automatic scaling function of the VNF on the VNF instance, thereby managing the automatic scaling function of the VNF, solving the problem of a conflict in controlling scaling of the VNF when automatic scaling function modules of individual VNFs at different levels are in effect in the related art, and further achieving the effect of avoiding the conflict in controlling the scaling of the VNF

The scaling of the VNF instance includes scaling out (or scaling up) and scaling in (or scaling down).

The scaling out means that when the VNF is composed of a plurality of virtualization deployment units (abbreviated to VDU), VDU instances constituting the VNF instance are increased to increase the capacity of the VNF instance. The scaling up means increasing a configuration of a virtual machine (abbreviated to VM) running the VNF instance, for example, a central processing unit (abbreviated to CPU), a memory, a network port, and the like are increased to increase the capability of the VNF instance.

Similarly, the scaling in mean that when the VNF is composed of a plurality of VDUs, the VDU instances constituting the VNF instance are reduced to reduce the capability of the VNF instance. The scaling down means reducing a configuration of the VM running the VNF instance, for example, the CPU, the memory, the network port and the like are reduced to reduce the capability of the VNF instance.

The management operation described above may be initiated by the EMS directly or may be initiated by other management devices through the EMS. In an alternative embodiment, step S202 includes: determining by the EMS that the automatic scaling function of the VNF on the VNFM is required to be managed according to a first instruction message issued by a network management system (NMS). The first instruction message is used for instructing to manage the automatic scaling function of the VNF on the VNFM. Alternatively, step S204 includes: determining by the EMS that the automatic scaling function of the VNF on the VNFM or the VNF instance is required to be managed according to a second instruction message issued by the NMS. The second instruction message is used for instructing to manage the automatic scaling function of the VNF on the VNF instance. In this way, managing the automatic scaling function of the VNF by the NMS is achieved.

FIG. 3 is a flow diagram of a second method for transmitting a management instruction according to an embodiment of the present disclosure. As shown in FIG. 3, the method includes steps described below.

In step S302, it is determined by a network management system (NMS) that an automatic scaling function of VNF on a virtualized network function manager (VNFM) is required to be managed.

In step S304, a first instruction message is transmitted to an element management system (EMS) by the NMS. The first instruction message is used for instructing the EMS to transmit a first management instruction to the VNFM, and the first management instruction is used for instructing the VNFM to manage the automatic scaling function of the VNF on the VNFM.

Alternatively, in step S306, it is determined by the NMS that the automatic scaling function of the VNF on a VNF instance is required to be managed. In step S308, a second instruction message is transmitted to the EMS by the NMS. The second instruction message is used for instructing the EMS to transmit a second management instruction to the VNFM or the VNF instance, and the second management instruction is used for instructing the VNFM or the VNF instance to manage the automatic scaling function of the VNF on the VNF instance.

By means of the above steps, the NMS can manage either the automatic scaling function of the VNF on the VNFM or the automatic scaling function of the VNF on the VNF instance, thereby managing the automatic scaling function of the VNF, solving the problem of a conflict in controlling scaling of the VNF when automatic scaling function modules of individual VNFs at different levels are in effect in the related art, and further achieving the effect of avoiding the conflict in controlling the scaling of the VNF

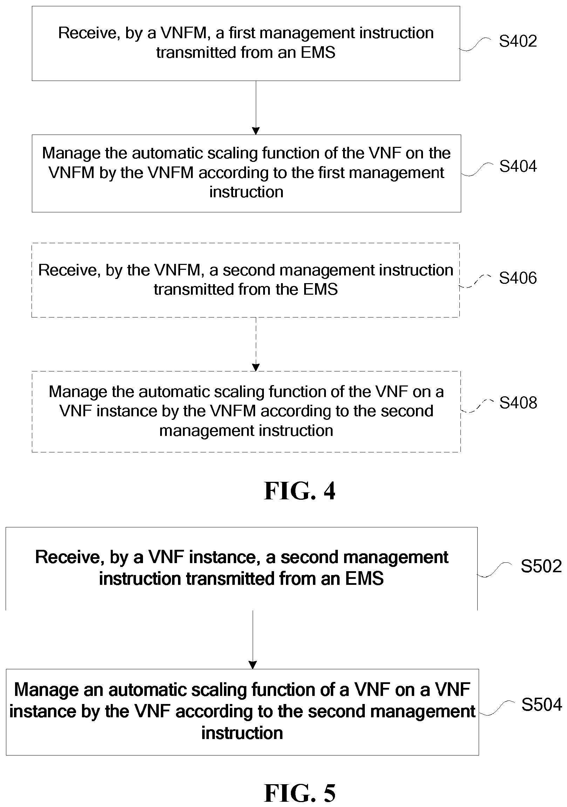

FIG. 4 is a flow diagram of a first method for managing an automatic scaling function of a virtualized network function (VNF) according to an embodiment of the present disclosure. As shown in FIG. 4, the method includes steps described below.

In step S402, a first management instruction transmitted from an element management system (EMS) is received by a virtualized network function manager (VNFM).

In step S404, the automatic scaling function of the virtualized network function (VNF) on the VNFM is managed by the VNFM according to the first management instruction.

Alternatively, in step S406, a second management instruction transmitted from the EMS is received by the VNFM. In step S408, the automatic scaling function of the VNF on the VNF instance is managed by the VNFM according to the second management instruction.

By means of the above steps, the automatic scaling function of the VNF on the VNFM or the automatic scaling function of the VNF on the VNF instance is managed. As a result, the problem of a conflict in controlling scaling of the VNF when automatic scaling function modules of individual VNFs at different levels are in effect in the related art is solved, and the effect of avoiding the conflict in controlling the scaling of the VNF is further achieved.

FIG. 5 is a flow diagram of a second method for managing an automatic scaling function of virtualized network function (VNF) according to an embodiment of the present disclosure. As shown in FIG. 5, the method includes steps described below.

In step S502, a second management instruction transmitted from an element management system (EMS) is received by a virtualized network function (VNF) instance.

In step S504, an automatic scaling function of the VNF on the VNF instance is managed by the VNF instance according to the second management instruction.

By means of the above steps, the automatic scaling function of the VNF on the VNF instance is managed. As a result, the problem of a conflict in controlling scaling of the VNF when automatic scaling function modules of individual VNFs at different levels are in effect in the related art is solved, and the effect of avoiding the conflict in controlling the scaling of the VNF is further achieved.

The present disclosure is described below with reference to specific embodiments. In the following embodiments, an automatic scaling function of a VNF instance is the above-mentioned automatic scaling function of the VNF

### First embodiment

In this embodiment, a management request is transmitted by the EMS, and the method includes steps described below.

In S1, a request, transmitted from the EMS, to manage the automatic scaling function of the VNF instance (stop/initiate the automatic scaling function of the VNF instance) is received by a VNFM.

In S2, management on the automatic scaling function of the VNF instance (stopping/initiating the automatic scaling function of the VNF instance) is performed by the VNFM.

In S3, a message indicating that the management on the automatic scaling function of the VNF instance (stopping/initiating the automatic scaling function of the VNF instance) is completed is returned to the EMS from the VNFM.

### Second embodiment

In this embodiment, a management command for automatically scaling the virtualized network function is transmitted by the NMS. The method includes steps described below.

In S1, a request to manage the automatic scaling function of the VNF instance (stop/initiate the automatic scaling function of the VNF instance) is transmitted to the EMS by the NMS. The automatic scaling function of the VNF instance may be on the VNFM or on the VNF instance.

In S2, the request received by the EMS is forwarded to the VNFM.

In S3, the request to manage the automatic scaling function of the VNF instance (stop/ initiate the automatic scaling function of the VNF instance), which is forwarded from the EMS, is received by the VNFM.

In S4, management on the automatic scaling function of the VNF instance (stopping/initiating the automatic scaling function of the VNF instance) is performed by the VNFM.

In S5, a message indicating that the management on the automatic scaling function of the VNF instance (stopping/initiating the automatic scaling function of the VNF instance) is completed is returned to the EMS from the VNFM.

In S6, the message indicating that the management on the automatic scaling function of the VNF instance (stopping/initiating the automatic scaling function of the VNF instance) is completed is returned to the NMS from the EMS.

### Third embodiment

In this embodiment, a method for managing the automatic scaling function of the VNF instance on the VNF instance will be described. The method includes steps described below.

In S1, a request to manage the automatic scaling function of the VNF instance on the VNF instance (stop/initiate the automatic scaling function of the VNF instance), which is transmitted from the NMS, is received by the EMS.

In S2, the request received is forwarded to a corresponding VNF instance by the EMS.

In S3, the request to manage the automatic scaling function (stop/initiate the automatic scaling function), which is forwarded from the EMS, is received by the VNF instance.

In S4, management on the automatic scaling function of the VNF instance (stopping/initiating the automatic scaling function) is performed by the VNF instance.

In S5, a message indicating that the management on the automatic scaling function of the VNF instance (stopping/initiating the automatic scaling function of the VNF instance) is completed is returned to the EMS from the VNF instance.

In S6, the message indicating that the management on the automatic scaling function of the VNF instance (stopping/initiating the automatic scaling function of the VNF instance) is completed is returned to the NMS from the EMS.

### Fourth embodiment

In this embodiment, a method for stopping the automatic scaling function of the VNF instance running on the VNFM will be described. The method includes steps described below.

In S1, a request to stop the automatic scaling function of the VNF instance, which is transmitted from the EMS, is received by the VNFM.

In S2, the automatic scaling function of the VNF instance running on the VNFM is stopped by the VNFM.

In S3, a message indicating that the automatic scaling function of the VNF instance is stopped is returned to the EMS from the VNFM.

### Fifth embodiment

In this embodiment, a method for initiating the automatic scaling function of the VNF instance running on the VNFM will be described. The method includes steps described below.

In S1, a request to initiate the automatic scaling function of the VNF instance, which is transmitted from the EMS, is received by the VNFM.

In S2, the automatic scaling function of the VNF instance running on the VNFM is initiated by the VNFM.

In S3, a message indicating that the automatic scaling function of the VNF instance is initiated is returned to the EMS from the VNFM.

### Sixth embodiment

In this embodiment, a management instruction for automatically scaling the virtualized network function is transmitted by the NMS. The method includes steps described below.

In S1, a request to manage the automatic scaling function of the VNF instance (stop/initiate the automatic scaling function of the VNF instance) is transmitted to the EMS by the NMS. The request includes but is not limited to the following parameter: a type parameter indicating a specific operation (stopping or initiating). The automatic scaling function of the VNF instance may be on the VNFM or on the VNF instance.

In S2, the request received is forwarded to the VNFM by the EMS. The request includes but is not limited to the following parameter: the type parameter indicating the specific operation (stopping or initiating).

In S3, the request to manage the automatic scaling function of the VNF instance (stop or initiate the automatic scaling function of the VNF instance), which is forwarded from the EMS, is received by the VNFM.

In S4, a specific operation to be performed (stopping or initiating the automatic scaling function of the VNF instance) is determined by the VNFM according to the type parameter of the specific operation included in the parameter of the request, and management on the automatic scaling function of the VNF instance is performed (stops or initiates the automatic scaling function of the VNF instance).

In S5, a message indicating that the management on the automatic scaling function of the VNF instance (stopping or initiating the automatic scaling function of the VNF instance) is completed is returned to the EMS from the VNFM.

In S6, the message indicating that the management on the automatic scaling function of the VNF instance (stopping or initiating the automatic scaling function of the VNF instance) is completed is returned to the NMS from the EMS.

### Seventh embodiment

In this embodiment, the NMS initiates a management instruction of the automatic scaling function of the VNF instance to manage the automatic scaling function of the VNF instance on the VNF instance. The method includes steps described below.

In S1, a request to stop the automatic scaling function of the VNF instance on the VNF instance, which is transmitted from the NMS, is received by the EMS. The request includes but is not limited to the following parameter: a unique identifier (such as VNFInstanceID) of the VNF instance whose automatic scaling function is to be stopped.

In S2, the request received is forwarded to a corresponding VNF instance by the EMS.

In S3, the request to stop the automatic scaling function, which is forwarded from the EMS, is received by the VNF instance.

In S4, the automatic scaling function of the VNF instance is stopped by the VNF instance.

In S5, a message indicating that the automatic scaling function of the VNF instance is stopped is returned to the EMS from the VNF instance.

In S6, the message indicating that the automatic scaling function of the VNF instance is stopped is returned to the NMS from the EMS.

Through the description of the above embodiments, those skilled in the art may clearly understand that the method according to the above embodiment may be implemented by means of software plus a necessary general hardware platform, and certainly, may be implemented in hardware, but in many cases, the former is a better implementation. Based on such an understanding, the technical solution of the present disclosure in essence or a part that contributes to the prior art may be embodied in the form of a software product. The computer software product is stored in a storage medium (such as a ROM/RAM, a magnetic disk, an optical disc), including several instructions for enabling a terminal device (which may be a mobile phone, a computer, a server, or a network device, and the like) to perform the methods described in the various embodiments of the present disclosure.

In present disclosure, a device for transmitting a management instruction is provided. The device is used for implementing the above embodiments and preferred implementations, and the descriptions thereof have been made and will not be repeated. As used below, the term "module" may implement a combination of software and/or hardware of a predetermined function. Although the apparatus described in the following embodiments is preferably implemented in software, an implementation of hardware or a combination of software and hardware is also possible and conceived.

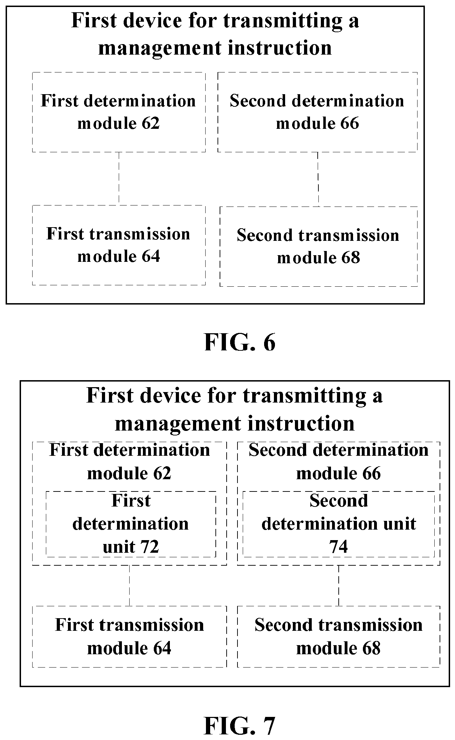

FIG. 6 is a structural block diagram showing a first device for transmitting a management instruction according to an embodiment of the present disclosure. The device is applied to an element management system (EMS). As shown in FIG. 6, the device includes a first determination module 62 and a first transmission module 64. Alternatively, the device includes a second determination module 66 and a second transmission module 68. The device will be described below.

The first determination module 62 is configured to determine that it is required to manage an automatic scaling function of VNF on a virtualized network function manager (VNFM). The first transmission module 64 is connected to the first determination module 62, and configured to transmit a first management instruction to the VNFM. The first management instruction is used for instructing the VNFM to manage the automatic scaling function of the VNF on the VNFM.

The second determination module 66 is configured to determine that it is required to manage the automatic scaling function of the VNF on a virtualized network function (VNF) instance. The second transmission module 68 is connected to the second determination module 66, and configured to transmit a second management instruction to the VNFM or the VNF instance. The second management instruction is used for instructing the VNFM or the VNF instance to manage the automatic scaling function of the VNF on the VNF instance.

FIG. 7 is a structural block diagram showing the first determination module 62 or the second determination module 66 in the first device for transmitting a management instruction according to an embodiment of the present disclosure. As shown in FIG. 7, the first determination module 62 includes a first determination unit 72, and the second determination module 66 includes a second determination unit 74.

The first determination unit 72 is configured to determine, according to a first instruction message transmitted from the network management system (NMS), that it is required to manage the automatic scaling function of the VNF on the VNFM. The first instruction message is used for instructing to manage the automatic scaling function of the VNF on the VNFM.

The second determination unit 74 is configured to determine, according to a second instruction message transmitted from the NMS, that it is required to manage the automatic scaling function of the VNF on the VNFM or the VNF instance. The second instruction message is used for instructing to manage the automatic scaling function of the VNF on the VNF instance.

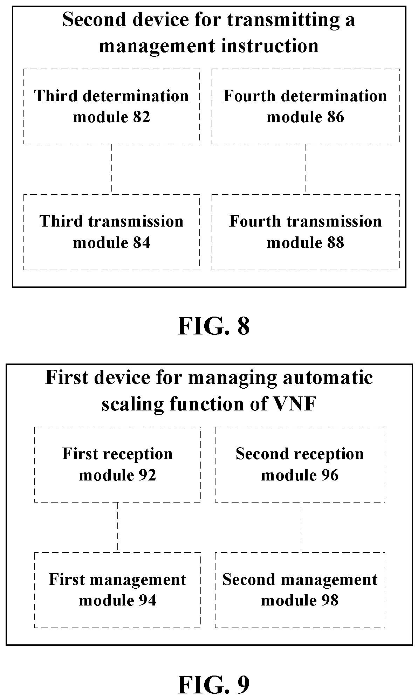

FIG. 8 is a structural block diagram showing a second device for transmitting a management instruction according to an embodiment of the present disclosure. The device is applied to a network management system (NMS). As shown in FIG. 8, the device includes a third determination module 82 and a third transmission module 84. Alternatively, the device includes a fourth determination module 86 and a fourth transmission module 88. The device will be described as follows.

The third determination module 82 is configured to determine that it is required to manage an automatic scaling function of VNF on a virtualized network function manager (VNFM). The third transmission module 84 is connected to the third determination module 82, and configured to transmit a first instruction message to the EMS. The first instruction message is used for instructing the EMS to transmit a first management instruction to the VNFM, and the first management instruction is used for instructing the VNFM to manage the automatic scaling function of the VNF on the VNFM.

The fourth determination module 86 is configured to determine that it is required to manage the automatic scaling function of the VNF on the VNF instance. The fourth transmission module 88 is connected to the fourth determination module 86, and configured to transmit a second instruction message to the EMS. The second instruction message is used for instructing the EMS to transmit a second management instruction to the VNFM or the VNF instance, and the second management instruction is used for instructing the VNFM or the VNF instance to manage the automatic scaling function of the VNF on the VNFM instance.

FIG. 9 is a structural block diagram showing a first device for managing an automatic scaling function of virtualized network function (VNF) according to an embodiment of the present disclosure. The device is applied to a virtualized network function manager (VNFM). As shown in FIG. 9, the device includes a first reception module 92 and a first management module 94. Alternatively, the device includes a second reception module 96 and a second management module 98. The device will be described below.

The first reception module 92 is configured to receive the first management instruction transmitted from the EMS. The first management module 94 is connected to the first reception module 92, and configured to manage the automatic scaling function of the VNF on the VNFM according to the first management instruction.

The second reception module 96 is configured to receive the second management instruction transmitted from the EMS. The second management module 98 is connected to the second reception module 96, and configured to manage the automatic scaling function of the VNF on the VNF instance according to the second management instruction.

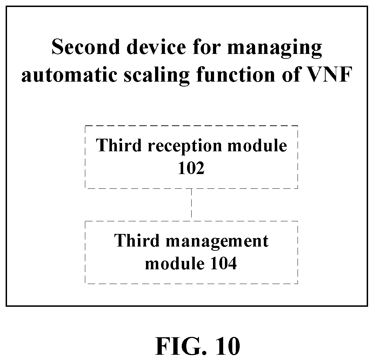

FIG. 10 is a structural block diagram showing a second device for managing an automatic scaling function of virtualized network function (VNF) according to an embodiment of the present disclosure. The device is applied to a virtualized network function (VNF) instance. As shown in FIG. 10, the device includes a third reception module 102 and a third management module 104. The device will be described below.

The third reception module 102 is configured to receive the second management instruction transmitted from the EMS. The third management module 104 is connected to the third reception module 102, and configured to manage the automatic scaling function of the VNF on the VNF instance according to the second management instruction.

It should be noted that the above modules may be implemented by software or hardware. For the latter, it may be implemented in the following manner, but it is not limited thereto: the above modules are all located in the same processor; or the above modules are respectively located in multiple processors.

Embodiments of the present disclosure further provide a storage medium. Alternatively, in this embodiment, the above-mentioned storage medium may be configured to store program codes for performing steps in the above respective embodiments.

Optionally, in this embodiment, the foregoing storage medium may include, but is not limited to, a U disk, a read-only memory (ROM), a random access memory (RAM), a removable hard disk, a magnetic disk, an optical disc, and other media capable of storing the program codes.

Optionally, in this embodiment, the processor executes the steps in the foregoing embodiments according to the program codes stored in the storage medium.

Optionally, for specific examples in this embodiment, reference may be made to examples described in the foregoing embodiments and alternative embodiments, which will not be described herein in this embodiment.

With the method of the present disclosure, it is possible to overcome a problem of a conflict when the automatic scaling function modules of individual VNF instances at different levels are in effect. By proposing a method for stopping or initiating one or more automatic scaling function modules of the VNF, one or more automatic scaling function modules of the VNF instance may be closed as needed to avoid the conflict, so that a simple and easy solution is provided for solving the problem of the conflict.

Obviously, those skilled in the art should understand that each module or step of the present disclosure described above may be implemented by a general-purpose computing apparatus, which may be concentrated on a single computing apparatus or distributed over a network formed by multiple computing apparatuses. Alternatively, they may be implemented with a program code that is executable by the computing apparatus, so that they may be stored in a storage apparatus for execution by the computing apparatus, and in some cases, the steps shown or described may be performed in a different order than that herein, or they are separately made into individual integrated circuit modules, or multiple of them are made into a single integrated circuit module. In this way, the present disclosure is not limited to any specific combination of hardware and software.

## Claims

1. A method for managing an automatic scaling function of virtualized network function, **characterized by** comprising one of:
determining (S202) by an element management system, EMS, that an automatic scaling function of virtualized network function, VNF, on a virtualized network function manager, VNFM, is to be managed, and transmitting (S204) a first management instruction to the VNFM by the EMS to instruct the VNFM to initiate or stop the automatic scaling function of the VNF on the VNFM, such that the VNFM initiates or stops scaling the VNF instance automatically; and
determining (S206) by the EMS that the automatic scaling function of the VNF on a VNF instance is to be managed, and transmitting (S208) a second management instruction to the VNFM or the VNF instance by the EMS to instruct the VNFM or the VNF instance to initiate or stop the automatic scaling function of the VNF on the VNF instance, such that the VNF instance initiates or stops scaling the VNF instance automatically.

2. The method according to claim 1, wherein the determining (S202) by an EMS that an automatic scaling function of VNF on a VNFM is to be managed comprises: determining by the EMS that the automatic scaling function of the VNF on the VNFM is to be managed according to a first instruction message transmitted from a network management system, NMS, wherein the first instruction message is used for instructing to initiate or stop the automatic scaling function of the VNF on the VNFM.

3. The method according to claim 1, wherein the determining (S206) by the EMS that the automatic scaling function of the VNF on a VNF instance is to be managed comprises: determining by the EMS that the automatic scaling function of the VNF on the VNF instance is to be managed according to a second instruction message transmitted from an NMS, wherein the second instruction message is used for instructing to initiate or stop the automatic scaling function of the VNF on the VNF instance.

4. The method of claim 1, further comprising:
receiving (S402), by the VNFM, the first management instruction transmitted from the EMS, and initiating or stopping (S404) the automatic scaling function of the VNF on the VNFM by the VNFM according to the first management instruction.

5. The method of claim 1, further comprising:
receiving (S406), by the VNFM, the second management instruction transmitted from the EMS, and initiating or stopping (S408) the automatic scaling function of the VNF on the VNF instance by the VNFM according to the second management instruction.

6. The method of claim 1, further comprising:
receiving (S502), by the VNF instance, the second management instruction transmitted from the EMS; and
initiating or stopping (S504) the automatic scaling function of the VNF on the VNF instance by the VNF instance according to the second management instruction.

7. A device for managing an automatic scaling function of virtualized network function, **characterized by** comprising:
a first determination module (62) configured to determine that an automatic scaling function of virtualized network function, VNF, on a virtualized network function manager, VNFM, is to be managed; and a first transmission module (64) configured to transmit a first management instruction to the VNFM, to instruct the VNFM to initiate or stop the automatic scaling function of the VNF on the VNFM, such that the VNFM initiates or stops scaling the VNF instance automatically; or
a second determination module (66) configured to determine that the automatic scaling function of the VNF on a VNF instance is to be managed; and a second transmission module (68) configured to transmit a second management instruction to the VNFM or the VNF instance, to instruct the VNFM or the VNF instance to initiate or stop the automatic scaling function of the VNF on the VNF instance, such that the VNF instance initiates or stops scaling the VNF instance automatically.

8. A non-transitory computer storage medium storing computer programs that are used for executing the method according to any one of claims 1-6.

## Patentansprüche

1. Verfahren zum Verwalten einer automatischen Skalierungsfunktion einer virtualisierten Netzwerkfunktion, **dadurch gekennzeichnet, dass** das Verfahren eines von Folgendem umfasst:
Bestimmen (S202) durch ein Elementverwaltungssystem (EMS), dass eine automatische Skalierungsfunktion einer virtualisierten Netzwerkfunktion (VNF) auf einem virtualisierten Netzwerkfunktionsverwalter (VNFM) verwaltet wird und Übertragen (S204) einer ersten Verwaltungsanweisung an das VNFM durch das EMS, um das VNFM anzuweisen, die automatische Skalierungsfunktion der VNF auf dem VNFM zu starten oder zu stoppen, so dass das VNFM ein Skalieren der VNF-Instanz automatisch startet oder stoppt; und
Bestimmen (S206) durch das EMS, dass die automatische Skalierungsfunktion der VNF auf einer VNF-Instanz verwaltet wird, und Übertragen (S208) einer zweiten Verwaltungsanweisung an das VNFM oder die VNF-Instanz durch das EMS, um das VNFM oder die VNF-Instanz anzuweisen, die automatische Skalierungsfunktion der VNF auf der VNF-Instanz zu starten oder zu stoppen, so dass die VNF-Instanz ein Skalieren der VNF-Instanz automatisch startet oder stoppt.

2. Verfahren nach Anspruch 1, wobei das Bestimmen (S202) durch ein EMS, dass eine automatische Skalierungsfunktion einer VNF auf einem VNFM verwaltet wird, Folgendes umfasst:
Bestimmen durch das EMS, dass die automatische Skalierungsfunktion der VNF auf dem VNFM gemäß einer ersten Anweisungsnachricht verwaltet wird, welche von einem Netzwerkverwaltungssystem (NMS) übertragen wird, wobei die erste Anweisungsnachricht zum Anweisen verwendet wird, die automatische Skalierungsfunktion der VNF auf dem VNFM zu starten oder zu stoppen.

3. Verfahren nach Anspruch 1, wobei das Bestimmen (S206) durch das EMS, dass die automatische Skalierungsfunktion der VNF auf einer VNF-Instanz verwaltet wird, Folgendes umfasst: Bestimmen durch das EMS, dass die automatische Skalierungsfunktion der VNF auf dem VNF gemäß einer zweiten Anweisungsnachricht verwaltet wird, welche von einem NMS übertragen wird, wobei die zweite Anweisungsnachricht zum Anweisen verwendet wird, die automatische Skalierungsfunktion der VNF auf der VNF-Instanz zu starten oder zu stoppen.

4. Verfahren nach Anspruch 1, ferner umfassend:
Empfangen (S402) der ersten Verwaltungsanweisung, welche von dem EMS übertragen wird, durch das VNFM, und Starten oder Stoppen (S404) der automatischen Skalierungsfunktion der VNF auf dem VNFM durch das VNFM gemäß der ersten Verwaltungsanweisung.

5. Verfahren nach Anspruch 1, ferner umfassend:
Empfangen (S406) der zweiten Verwaltungsanweisung, welche von dem EMS übertragen wird, durch das VNFM, und Starten oder Stoppen (S408) der automatischen Skalierungsfunktion der VNF auf der VNF-Instanz durch das VNFM gemäß der zweiten Verwaltungsanweisung.

6. Verfahren nach Anspruch 1, ferner umfassend:
Empfangen (S502) der zweiten Verwaltungsanweisung, welche von dem EMS übertragen wird, durch die VNF-Instanz; und
Starten oder Stoppen (S504) der automatischen Skalierungsfunktion der VNF auf der VNF-Instanz durch die VNF-Instanz gemäß der zweiten Verwaltungsanweisung.

7. Vorrichtung zum Verwalten einer automatischen Skalierungsfunktion einer virtualisierten Netzwerkfunktion, **dadurch gekennzeichnet, dass** sie Folgendes umfasst:
ein erstes Bestimmungsmodul (62), welches dazu konfiguriert ist, zu bestimmen, dass eine automatische Skalierungsfunktion einer virtualisierten Netzwerkfunktion (VNF) auf einem virtualisierten Netzwerkfunktionsverwalter (VNFM) verwaltet wird, und ein erstes Übertragungsmodul (64), welches dazu konfiguriert ist, eine erste Verwaltungsanweisung an das VNFM zu übertragen, um das VNFM anzuweisen, die automatische Skalierungsfunktion der VNF auf dem VNFM zu starten oder zu stoppen, so dass das VNFM ein Skalieren der VNF-Instanz automatisch startet oder stoppt; und
ein zweites Bestimmungsmodul (66), welches dazu konfiguriert ist zu bestimmen, dass die automatische Skalierungsfunktion der VNF auf einer VNF-Instanz verwaltet wird, und ein zweites Übertragungsmodul (68), welches dazu konfiguriert ist, eine zweite Verwaltungsanweisung an das VNFM oder die VNF-Instanz zu übertragen, um das VNFM oder die VNF-Instanz anzuweisen, die automatische Skalierungsfunktion der VNF auf der VNF-Instanz zu starten oder zu stoppen, so dass die VNF-Instanz ein Skalieren der VNF-Instanz automatisch startet oder stoppt.

8. Nichtflüchtiges Computerspeichermedium, welches Computerprogramme speichert, welche zum Ausführen des Verfahrens nach einem der Ansprüche 1-6 verwendet werden.

## Revendications

1. Procédé de gestion d'une fonction de mise à l'échelle automatique d'une fonction de réseau virtualisée, **caractérisé en ce qu'**il comprend l'un parmi :
la détermination (S202) par un système de gestion d'éléments, EMS, qu'une fonction de mise à l'échelle automatique d'une fonction de réseau virtualisée, VNF, sur un gestionnaire de fonction de réseau virtualisée, VNFM, doit être gérée, et la transmission (S204) d'une première instruction de gestion au VNFM par l'EMS pour donner l'instruction au VNFM de déclencher ou d'arrêter la fonction de mise à l'échelle automatique de la VNF sur le VNFM, de sorte que le VNFM déclenche ou arrête la mise à l'échelle de l'instance de VNF automatiquement ; et
la détermination (S206) par l'EMS que la fonction de mise à l'échelle automatique de la VNF sur une instance de VNF doit être gérée, et la transmission (S208) d'une seconde instruction de gestion au VNFM ou à l'instance de VNF par l'EMS pour donner l'instruction au VNFM ou à l'instance de VNF de déclencher ou d'arrêter la fonction de mise à l'échelle automatique de la VNF sur l'instance de VNF, de sorte que l'instance de VNF déclenche ou arrête la mise à l'échelle de l'instance de VNF automatiquement.

2. Procédé selon la revendication 1, dans lequel la détermination (S202) par un EMS qu'une fonction de mise à l'échelle automatique de VNF sur un VNFM doit être gérée comprend : la détermination par l'EMS que la fonction de mise à l'échelle automatique de la VNF sur le VNFM doit être gérée selon un premier message d'instruction transmis en provenance d'un système de gestion de réseau, NMS, dans lequel le premier message d'instruction est utilisé pour donner l'instruction de déclencher ou d'arrêter la fonction de mise à l'échelle automatique de la VNF sur le VNFM.

3. Procédé selon la revendication 1, dans lequel la détermination (S206) par l'EMS que la fonction de mise à l'échelle automatique de la VNF sur une instance de VNF doit être gérée comprend : la détermination par l'EMS que la fonction de mise à l'échelle automatique de la VNF sur l'instance de VNF doit être gérée selon un second message d'instruction transmis en provenance d'un NMS, dans lequel le second message d'instruction est utilisé pour donner l'instruction de déclencher ou d'arrêter la fonction de mise à l'échelle automatique de la VNF sur l'instance de VNF.

4. Procédé selon la revendication 1, comprenant en outre :
la réception (S402), par le VNFM, de la première instruction de gestion transmise en provenance de l'EMS, et le déclenchement ou l'arrêt (S404) de la fonction de mise à l'échelle automatique de la VNF sur le VNFM par le VNFM selon la première instruction de gestion.

5. Procédé selon la revendication 1, comprenant en outre :
la réception (S406), par le VNFM, de la seconde instruction de gestion transmise en provenance de l'EMS, et le déclenchement ou l'arrêt (S408) de la fonction de mise à l'échelle automatique de la VNF sur l'instance de VNF par le VNFM selon la seconde instruction de gestion.

6. Procédé selon la revendication 1, comprenant en outre :
la réception (S502), par l'instance de VNF, de la seconde instruction de gestion transmise en provenance de l'EMS ; et
le déclenchement ou l'arrêt (S504) de la fonction de mise à l'échelle automatique de la VNF sur l'instance de VNF par l'instance de VNF selon la seconde instruction de gestion.

7. Dispositif de gestion d'une fonction de mise à l'échelle automatique d'une fonction de réseau virtualisée, **caractérisé en ce qu'**il comprend :
un premier module de détermination (62) configuré pour déterminer qu'une fonction de mise à l'échelle automatique d'une fonction de réseau virtualisée, VNF, sur un gestionnaire de fonction de réseau virtualisée, VNFM, doit être gérée ; et un premier module de transmission (64) configuré pour transmettre une première instruction de gestion au VNFM, pour donner l'instruction au VNFM de déclencher ou d'arrêter la fonction de mise à l'échelle automatique de la VNF sur le VNFM, de sorte que le VNFM déclenche ou arrête la mise à l'échelle de l'instance de VNF automatiquement ; ou
un second module de détermination (66) configuré pour déterminer que la fonction de mise à l'échelle automatique de la VNF sur une instance de VNF doit être gérée ; et un second module de transmission (68) configuré pour transmettre une seconde instruction de gestion au VNFM ou à l'instance de VNF, pour donner l'instruction au VNFM ou à l'instance de VNF de déclencher ou d'arrêter la fonction de mise à l'échelle automatique de la VNF sur l'instance de VNF, de sorte que l'instance de VNF déclenche ou arrête la mise à l'échelle de l'instance de VNF automatiquement.

8. Support de stockage informatique non transitoire stockant des programmes informatiques utilisés pour exécuter le procédé selon l'une quelconque des revendications 1 à 6.
